# EUROPÄISCHE PATENTSCHRIFT

(11) **EP 0 767 316 B1**
(45) Veröffentlichungstag und Bekanntmachung des Hinweises auf die Patenterteilung: **27.03.2002**
(21) Anmeldenummer: 96113370.9
(22) Anmeldetag: 21.08.1996
(51) Int. Cl.: F16C 3/14, F16N 31/02, F16C 9/02

(54) **Kurbelwellenlagerung einer mehrzylindrigen Brennkraftmaschine**
Crankshaft bearing for a multicylinder combustion engine
Palier de vilebrequin pour moteur à plusieurs cylindres

(30) Priorität: 06.10.1995 DE 19537192
(43) Veröffentlichungstag der Anmeldung: 09.04.1997
(73) Patentinhaber: Dr.Ing.h.c. F. Porsche Aktiengesellschaft, 70435 Stuttgart (DE)
(72) Erfinder: Muddemann, Michael, 71287 Weissach (DE); Wüst, Johannes, 71287 Weissach-Flacht (DE); Nowak, Dieter, 73235 Weilheim (DE); Ampferer, Herbert, 74343 Sachsenheim (DE)

(56) Entgegenhaltungen:
- EP-A- 0 038 560
- CH-A- 161 917
- DE-C- 643 652
- DE-C- 3 426 208
- FR-A- 395 540
- US-A- 1 398 170

## Beschreibung

Die Ertindung betrifft eine Kurbelwellenlagerung einer mehrzylindrigen Brennkraftmaschine.

Aus der DE 34 26 208 C 1 ist beispielsweise eine Kurbelwellenlagerung bekannt, die im Bereich der Lagerbuchse bzw. des Hauptlagerzapfens der Kurbelwelle mit einer zumindest teilweise umlaufenden Ölnut in der Lagerbuchse oder der Lagerbohrung versehen ist. Diese Ölnut wird über eine Bohrung in der Lagerbrücke auf an sich bekannte Weise mit der Ölversorgung der Brennkraftmaschine verbunden, um im Betrieb die umlaufende Kurbelwelle, insbesondere deren Hauptlagerzapfen und indirekt die Pleuellagerzapfen zu schmieren. Das in der Ölnut geführte Schmiermittel wird im Betrieb der Brennkraftmaschine durch den anstehenden Öldruck in den Spalt zwischen Lagerbohrung und Kurbelwellenzapfen verdrängt und tritt am Rand der Lagerbohrung aus. Dort wird es von den rotierenden Wangen der Kurbelwelle mitgerissen und radial bzw. tangential abgeschleudert. Dieses Abschleudern des an den Lagerstellen austretenden Schmiermittels führt zu einer erheblichen Verwirbelung des Öls und führt letztendlich zu einer starken Verschäumung bzw. Anreicherung mit Luft. Darüberhinaus wird das abgeschleuderte Öl durch die starke Verteilung im Kurbelwellenraum sehr lange aus einem in der Regel unterhalb des Kurbelwellenlagerraums befindlichen Ölreservoir zurückgehalten. Dies führt dazu, daß die für den sicheren Betrieb der Brennkraftmaschine erforderlichen Ölmengen relativ hoch sein müssen, um in allen Betriebszuständen, insbesondere bei Quer- und Längsbeschleunigungen, einen ausreichenden Ölstand im Reservoir zu gewährleisten. Die durch das Abschleudern und die starke Zerteilung des Öls auftretende starke Ölverschäumung bedeutet gleichzeitig einen erheblichen Qualitätsverlust des Schmiermittels bzw. erfordert aufwendige Maßnahmen, um den Luftgehalt des Öls abzusenken und eine sichere Funktion der hydraulisch beaufschlagten Bauteile zu gewährleisten. Die großen erforderlichen Ölmengen und der starke Lufteintrag in das Öl führen zu merklichen Leistungseinbußen bzw. zu erhöhten Brennstoffverbräuchen, da große Mengen Schmiermittel auf Betriebstemperatur gebracht und im Umlauf gehalten werden müssen. Dies ist einerseits aus energetischen Gründen nicht wünschenswert, andererseits machen die gestiegenen Anforderungen an die Umweltverträglichkeit von Brennkraftmaschinen bzw. Personenkraftwagen den Einsatz hoher Ölmengen nicht akzeptabel.

Aus der DE 643 652 C ist eine Kurbelwellenlagerung einer Brennkraftmaschine mit geteilten Kurbellagern sowie damit verbundenen Lagerbrücken bekannt. In den Lagerbrücken sind in die Lagerflächen der Kurbellager mündende Schmierölzuführungen vorgesehen. Das aus den Lagern austretende Öl wird von einer aufwendigen Ölfangvorrichtung mit drehenden sowie fest angeordneten Ölfängern aufgefangen. Die fest angeordneten Ölfänger sind über die Kurbellager an den Lagerbrücken befestigt und weisen jeweils eine umlaufende, an ihren radialen Innenseiten offene Ölrinne sowie einen in Einbaulage unteren Ablauf auf. Die drehenden Ölfänger sind jeweils als zweiteilige runde Scheibe ausgeführt und an den Kurbelwangen befestigt. Jede der runden Scheiben wird dicht von einem der fest angeordneten Ölfänger umfasst.

Der Erfindung liegt demgegenüber die Aufgabe zugrunde, eine derartige Kurbelwellenlagerung so weiterzubilden, daß auf einfache weise eine übermäßige Verschäumung des Öls verhindert wird, daß gleichzeitig die Zeit für den Aufenthalt des abgeschleuderten bzw. verwirbelten Öls innerhalb der Kurbelwellenlagerung bzw. des Kurbelwellenraums verringert wird, so daß einerseits geringere Ölmengen für den Betrieb der Brennkraftmaschine ausreichen und das in das Ölreservoir gelangende Öl-Luft-Gemisch einen wesentlich geringeren Luftanteil enthält.

Diese Aufgabe wird erfindungsgemäß mit den Merkmalen des Hauptanspruches gelöst. Durch Ausbildung von Ölrinnen an den Seitenflächen der Lagerbrücken, wobei die Ölrinnen als Fortsätze, die mit geringem Abstand zum Rotationsumfang der Kurbelwangen verlaufen, einstückig mit den Lagerbrücken ausgebildet sind, kann auf einfache weise das von den Wangen der Kurbelwelle radial bzw. tangential abgeschleuderte Öl aufgefangen und geführt werden. Eine Verteilung im gesamten Kurbelraum wird zu einem großen Teil verhindert. Durch die Öffnung dieser Ölrinnen nach unten kann ein wirksames Auffangen, Weiterleiten und eine gezielte Abfuhr des gefangenen Öls in das Ölreservoir (Ölwanne) sichergestellt werden. Dadurch wird insgesamt die Verweildauer des Öls im Kurbelwellenraum verringert, so daß das aus den Lagerstellen austretende Öl schneller ins Ölreservoir gelangt und somit dem Ölkreislauf der Brennkraftmaschine schneller zur Verfügung steht, so daß dieser mit geringeren Ölmengen auskommt. Gleichzeitig wird durch das Auffangen und Führen des Öls ein Verschäumen weitgehend verhindert bzw. verringert, so daß auch hier eine Verbesserung im Hinblick auf die Schmiereigenschaften und die Fördereigenschaften des Öls zu erzielen ist, was insbesondere im Hinblick auf die Funktion hydraulischer Bauteile wie beispielsweise Tassenstößel mit Ventilspielausgleichseinrichtungen, Kettenspanner, o. ä. wichtig ist.

Die einstückig mit den Lagerbrücken ausgebildeten Fortsätze sind besonders vorteilhaft, wenn die Lagerteile beispielsweise als Gußteil aus einer Aluminiumlegierung hergestellt sind.

Der Abstand der Ölrinnen zum Rotationsumfang der Kurbelwellenwangen wird möglichst gering gehalten. Auch damit wird die Menge des an den Ölrinnen vorbei in den Kurbelraum gelangenden Öls gering gehalten.

Die Ölführung des an den Kurbelwangen abgeschleuderten Öls ist besonders wirksam, wenn die Ölrinnen in beiden zusammengehörigen Lagerbrücken ausgebildet und miteinander verbunden sind. Dadurch kann über einen großen Umfangsbereich das Öl aufgefangen und gezielt abgeleitet werden. Die Ölführung ist besonders günstig, wenn sich die Ölrinnen über einen Umfangsbereich von 270° oder mehr erstrecken.
Die Ölrinnen lassen sich fertigungstechnisch mit relativ geringem Aufwand erstellen, z.B. durch Fräsen, wenn sie einen etwa trapezförmigen Querschnitt haben. Gleichzeitig wird durch diesen Querschnitt eine gute und wirkungsvolle Führung sichergestellt.

Die Ölführung bzw. das Ableiten des von den Kurbelwangen abgeschleuderten Öls ist besonders wirkungsvoll, wenn die Ölrinnen die Kurbelwangen der Kurbelwelle zumindest teilweise in axialer Richtung übergreifen. Dabei ist eine möglichst nahe Heranführung der Ölrinnen an das Pleuel sinnvoll, um den nicht überdeckten Raum gering zu halten. Die Ölmenge, die an den Ölrinnen vorbei in den freien Kurbelraum gelangen kann, wird damit gering gehalten.

Weitere Vorteile und vorteilhafte Weiterbildungen der Erfindung ergeben sich aus den Unteransprüchen und der Beschreibung.

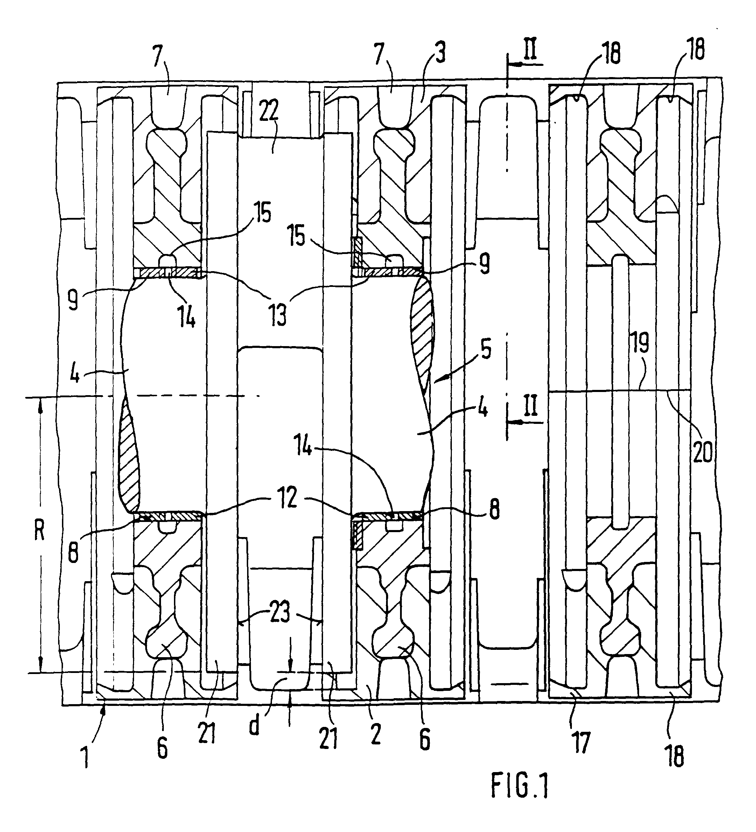

Letztere zeigt in
- Fig. 1: einen nur teilweise dargestellten Längsschnitt durch eine Kurbelwellenlagerung mit ebenfalls nur teilweise dargestellter Kurbelwelle,

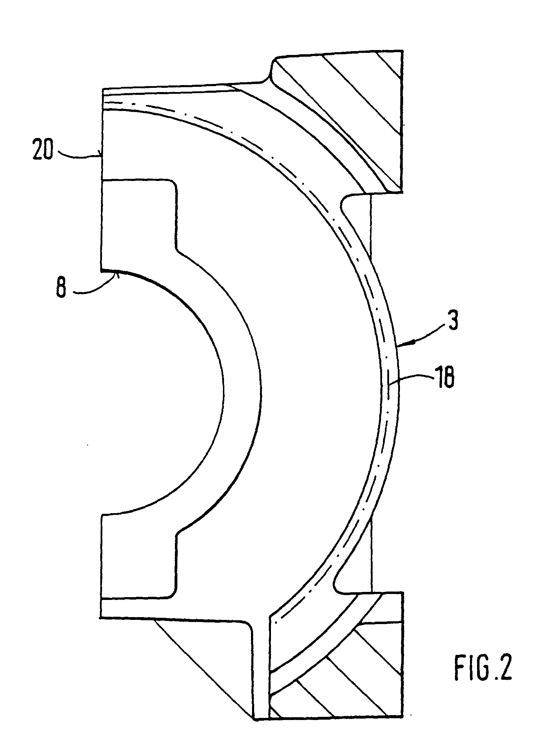

- Fig. 2: einen Querschnitt durch ein Lagerteil der Kurbelwellenlagerung entlang der Linie II-II nach Fig. 1,

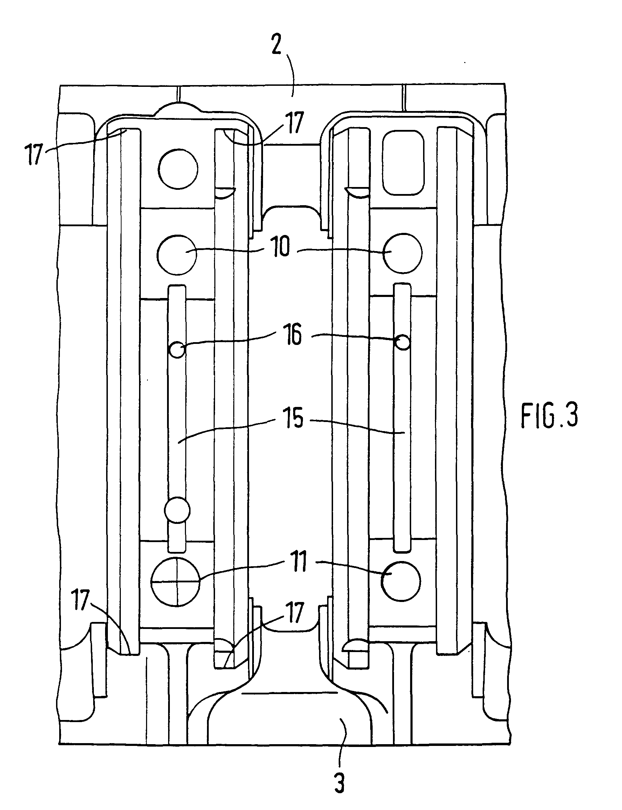

- Fig. 3: eine Draufsicht auf die Flanschfläche eines Lagerteils.

Die in diesem Ausführungsbeispiel dargestellte Kurbelwellenlagerung umfaßt ein Lagergestell mit Lagerbrücken, das zur Verbesserung der Steifigkeit in ein an sich bekanntes Kurbelgehäuse einer Brennkraftmaschine eingesetzt ist. Das Lagergesteil in diesem Ausführungsbeispiel ist für den Einsatz in einer Brennkraftmaschine der Boxer-Bauart ausgeführt, eine Übertragung auf Brennkraftmaschinen in Reihenbauweise oder mit V-förmiger Zylinderanordnung ist ohne weiteres möglich.

Das Lagergestell 1 besteht aus einem leiterförmigen Lageroberteil 2 und einem ebenfalls leiterförmigen Lagerunterteil 3. Beide weisen je Hauptlagerzapfen 4 der Kurbelwelle 5 eine Lagerbrücke 6, 7 mit Lagerbohrung 8, 9 auf, die einander gegenüber liegen und durch nicht dargestellte Lagerschrauben, die in fluchtenden Bohrungen 10, 11 angeordnet sind, fest miteinander verbunden sind. Die Lagerbohrungen sind mit halbkreisförmigen Lagerschalen 12, 13 versehen, in denen Bohrungen 14 ausgebildet sind, die mit einer umlaufenden Ringnut 15 in den Lagerbohrungen verbunden sind. Über eine in die Ringnut 15 einmündende Bohrung 16 ist diese Ringnut 15 mit der Ölversorgung der Brennkraftmaschine verbunden.

An den Seitenflächen der Lagerbrücken 6, 7 sind kreissegmentförmige Fortsätze 17, 18 ausgebildet, die sich ausgehend vom oberen Teil einer Flanschfläche 19, 20 über einen Umfangsbereich von - in diesem Ausführungsbeispiel - etwa 145° erstrecken. Die Fortsätze 17, 18 sind im Bereich ihrer freien Stirnseite nach innen abgeschrägt, so daß sie eine radial nach innen offene Rinne ausbilden, d.h. ihr Querschnitt ist etwa trapezförmig. Die Fortsätze 17, 18 bilden eine Ölrinne und verlaufen mit relativ geringem Abstand d zum Rotationsumfang der Kurbelwangen 21 mit Radius R. Die Fortsätze 17, 18 übergreifen die Kurbelwangen 21 der Kurbelwelle 5 in axialer Richtung und reichen etwa bis an die Verlängerung der den jeweiligen Pleuelzapfen 22 zugewandten Innenseiten 23 der Kurbelwangen 21.

Wie bereits oben angeführt, ist das in diesem Ausführungsbeispiel dargestellte Lagergestell 1 für den Einbau in einer Brennkraftmaschine der Boxer-Bauart vorgesehen. Die Flanschflächen 19, 20 der beiden Lagerteile (Lageroberteil 2, Lagerunterteil 3) verlaufen bei horizontal angeordneten Zylindern vertikal, so daß die miteinander verbundenen Ölrinnen einen nach unten offenen Kreisring ausbilden. Das im Betrieb der Brennkraftmaschine in den Ölrinnen geführte Öl kann somit nach unten austreten und auf relativ kurzem Weg in eine nicht näher dargestellte unterhalb des Lagergestells angeordnete Ölwanne abfließen.

Die Ausbildung von Ölrinnen ist nicht auf die dargestellte und beschriebene Form der Kurbelwellenlagerung beschränkt. Es ist ohne weiteres möglich, das Lageroberteil mit den oberen Lagerbrücken direkt ins Kurbelgehäuse zu integrieren. Das Lagerunterteil kann dabei - wie dargestellt - als leiterförmiges Lagergestell ausgebildet sein. Es ist auch möglich, das Lagerunterteil mit den anteiligen Lagerbrücken in Form einzelner Lagerdeckel auszubilden.

## Patentansprüche

1. Kurbelwellenlagerung einer mehrzylindrigen Brennkraftmaschine mit einem oberen Lagerteil (2) und einem unteren Lagerteil (3) sowie damit verbundenen oberen und unteren Lagerbrücken (6, 7) und mit Schmierölzuführungen (14, 15, 16), die in die Lagerflächen der Lagerbrücken münden, wobei an den Seitenflächen mindestens einer der Lagerbrücken zumindest teilweise umlaufende Ölrinnen (17, 18) ausgebildet sind, die an ihren radialen Innenseiten offen sind sowie einen in Einbaulage unteren Ablauf aufweisen, wobei die Wandungen der Ölrinnen (17, 18) einstückig mit den Lagerbrücken (6, 7) ausgebildet sind und wobei die die Ölrinnen (17, 18) bildenden Fortsätze mit relativ geringem Abstand (d) zum Rotationsumfang der Kurbelwangen (21) verlaufen.

2. Kurbelwellenlagerung nach Anspruch 1, **dadurch gekennzeichnet, daß** die Ölrinnen (17, 18) in beiden zusammengehörigen Lagerbrücken (6, 7) ausgebildet und miteinander verbunden sind.

3. Kurbelwellenlagerung nach Anspruch 2, **dadurch gekennzeichnet, daß** die Ölrinnen (17, 18) sich über einen Umfangsbereich erstrecken, der größer oder gleich 270° ist.

4. Kurbelwellenlagerung nach einem der vorangehenden Ansprüche, **dadurch gekennzeichnet, daß** die Ölrinnen (17, 18) einen etwa trapezförmigen Querschnitt haben.

5. Kurbelwellenlagerung nach einem der vorangehenden Ansprüche, **dadurch gekennzeichnet, daß** die oberen und/oder unteren Lagerbrücken (6, 7) in einem leiterförmigen oberen und/oder unteren Kurbelwellenlagergestell (2, 3) ausgebildet sind.

6. Kurbelwellenlagerung nach einem der vorangehenden Ansprüche, **dadurch gekennzeichnet, daß** die Ölrinnen (17, 18) die Kurbelwangen (21) der Kurbelwelle (5) in axialer Richtung bis etwa an die Verlängerung der den jeweiligen Pleuelzapfen (22) zugewandten Innenseite (23) der Kurbelwangen (21) reichend, übergreifen.

7. Kurbelwellenlagerung nach einem der vorangehenden Ansprüche, **dadurch gekennzeichnet, daß** die Ölrinnen (17, 18) etwa kreisförmig ausgebildet sind und ihr Durchmesser nur geringfügig größer ist als der des Rotationsumfanges der Kurbelwangen (21).

## Claims

1. A crankshaft mounting of a multiple-cylinder internal-combustion engine, with an upper bearing part (2) and a lower bearing part (3) as well as upper and lower bearing bridges (6, 7) connected thereto and with lubricating-oil supply means (14, 15, 16) opening into the bearing faces of the bearing bridges, wherein at least partially continuous oil channels (17, 18), which are open on the radial inner sides thereof and which have a lower discharge in the fitted position, are formed on the lateral faces of at least one of the bearing bridges, wherein the walls of the oil channels (17, 18) are formed integrally with the bearing bridges (6, 7), and wherein the extensions forming the oil channels (17, 18) extend at a relatively slight distance (d) from the rotational perimeter of the crank webs (21), the distance (d) not dropping below a minimum distance of about 4 mm.

2. A crankshaft mounting according to Claim 1, **characterized in that** the oil channels (17, 18) are formed in the two mutually associated bearing bridges (6, 7) and are connected to each other.

3. A crankshaft mounting according to Claim 2, **characterized in that** the oil channels (17, 18) extend over a peripheral range which is greater than or equal to 270°C.

4. A crankshaft mounting according to one of the preceding Claims, **characterized in that** the oil channels (17, 18) have a substantially trapezoidal cross-section.

5. A crankshaft mounting according to one of the preceding Claims, **characterized in that** the upper and/or lower bearing bridges (6, 7) are formed in a ladder-shaped upper and/or lower crankshaft bearing frame (2, 3).

6. A crankshaft mounting according to one of the preceding Claims, **characterized in that** the oil channels (17, 18) engage over the crank webs (21) of the crankshaft (5) in the axial direction so as to reach about as far as the extension of the inner sides (23) of the crank webs (21) facing the respective connecting-rod journals (22).

7. A crankshaft mounting according to one of the preceding Claims, **characterized in that** the oil channels (17, 18) are substantially circular and the diameter thereof is only slightly greater than that of the rotational perimeter of the crank webs (21).

## Revendications

1. Palier de vilebrequin d'un moteur à combustion interne à plusieurs cylindres, comportant une partie de palier supérieure (2) et une partie de palier inférieure (3) ainsi que des ponts de palier supérieur et inférieur (6, 7) reliés à celles-ci et comportant des amenées de lubrifiant (13, 15, 16) qui débouchent dans les surfaces de palier des ponts de palier, dans lequel, sur les surfaces latérales d'au moins l'un des ponts de palier, sont formées de gorges à huile (17, 18) au moins en partie périphériques, qui sont ouvertes sur leurs côtés intérieurs radiaux et qui comportent un écoulement inférieur en position de montage, dans lequel les parois des gorges à huile (17, 18) sont réalisées d'une seule pièce avec les ponts de palier (6, 7) et dans lequel les prolongements, qui forment les gorges à huile (17, 18), s'étendent à une distance (d) relativement réduite de la circonférence de rotation des flasques de vilebrequin (21), qui n'est pas inférieure à une distance minimale d'environ 4 mm.

2. Palier de vilebrequin selon la revendication 1, **caractérisé en ce que** les gorges à huile (17, 18) sont réalisées dans deux ponts de palier (6, 7) qui vont ensemble, et sont reliées entre elles.

3. Palier de vilebrequin selon la revendication 2, **caractérisé en ce que** les gorges à huile (17, 18) s'étendent sur une zone de la circonférence qui est supérieure ou égale à 270°.

4. Palier de vilebrequin selon l'une des revendications précédentes, **caractérisé en ce que** les gorges à huile (17, 18) ont une section approximativement trapézoïdale.

5. Palier de vilebrequin selon l'une des revendications précédentes, **caractérisé en ce que** les ponts de palier supérieurs et/ou inférieurs (6, 7) sont réalisés dans un bâti de palier de vilebrequin supérieur et/ou inférieur (2, 3) en forme d'échelle.

6. Palier de vilebrequin selon l'une des revendications précédentes, **caractérisé en ce que** les gorges à huile (17, 18) passent, dans la direction axiale, sur les flasques (21) du vilebrequin (5), approximativement jusqu'au prolongement des côtés intérieurs (23) tournés vers les tourillons de bielle (22) respectifs, des flasques de vilebrequin (21).

7. Palier de vilebrequin selon l'une des revendications précédentes, **caractérisé en ce que** les gorges à huile (17, 18) sont approximativement de forme circulaire et leur diamètre est seulement légèrement supérieur à celui de la circonférence de rotation des flasques de vilebrequin (21).
